# EUROPÄISCHE PATENTSCHRIFT

(11) **EP 2 285 547 B1**
(45) Veröffentlichungstag und Bekanntmachung des Hinweises auf die Patenterteilung: **08.08.2012**
(21) Anmeldenummer: 09765516.1
(22) Anmeldetag: 27.05.2009
(51) Int. Cl.: B29C 47/08, B29C 47/40, B29C 47/38, B30B 11/24

(54) **Mehrschneckenextruder mit Synchronisations- und Torsionsübertragungsseinrichtung**
Multiple-screw extruder with means for synchronization- and torque-transmission
Extrudeuse multi-vis avec moyens de synchronisation et de transmission du couple

(30) Priorität: 19.06.2008 DE 102008029130
(43) Veröffentlichungstag der Anmeldung: 23.02.2011
(73) Patentinhaber: Brückner Maschinenbau GmbH & Co. Kg, 83313 Siegsdorf (DE)
(72) Erfinder: ECKART, Ludwig, 83278 Traunstein (DE); BAMBERGER, Werner, 83278 Traunstein (DE); BAUMEISTER, Michael, 83278 Traunstein (DE); OEDL, Günter, A-5020 Salzurg (AT)
(74) Vertreter: Flach, Dieter Rolf Paul
(86) Internationale Anmeldenummer: PCT/EP2009/003779
(87) Internationale Veröffentlichungsnummer: WO 2009/152936

(56) Entgegenhaltungen:
- EP-A1- 0 775 569
- EP-A1- 1 454 733
- EP-A1- 1 839 840
- EP-A2- 0 084 668
- WO-A1-2007/059547
- DE-A1- 3 243 343
- FR-E- 96 593
- GB-A- 892 506
- GB-A- 2 116 866
- JP-A- 2000 064 342
- US-A- 3 734 635
- US-A- 4 022 440
- US-A- 4 521 026
- US-A- 4 586 402
- US-A- 4 695 240
- US-A1- 2007 019 500

## Beschreibung

Die Erfindung betrifft einen Mehrschneckenextruder, insbesondere einen Doppelschneckenextruder, nach dem Oberbegriff des Anspruches 1.

Extruder im Allgemeinen und Doppelschneckenextruder im Besonderen sind hinlänglich bekannt. Sie werden insbesondere zur Plastifizierung von Kunststoffmaterial verwendet, das in einem nachfolgenden Schritt weiter verarbeitet werden kann. Derartige Extruderanordnungen werden beispielsweise auch zur Herstellung von Kunststofffolien eingesetzt, wobei das aus dem Extruder austretende plastifizierte Kunststoffmaterial über eine Kühlwalze und eine nachfolgende Reckanlage zu einer Kunststofffolie verarbeitet werden kann.

Bei Mehrschneckenextrudern im Allgemeinen und Doppelschneckenextrudern im Besonderen werden die einzelnen Extruderschnecken üblicherweise über eine Motor-Getriebe-Einheit angetrieben. Dies ist notwendig, um die Extruderschnecken in engen Toleranzen synchron anzutreiben.

In der Regel wird dazu ein entsprechend groß dimensionierter Motor vorgesehen, welchem eine erwähnte Getriebeanordnung nachgeschaltet ist, worüber eine Kraftaufteilung auf die einzelnen Extruderschnecken erfolgen kann und den Extruderschnecken die gewünschte Drehrichtung vorgegeben werden kann.

Derartige Getriebe können beispielsweise so aufgebaut sein, dass eine Antriebswelle einer Motoranordnung das Drehmoment direkt auf eine erste, einer Extruderschnecke zugeordnete Abtriebswelle und über ein Zwischenrad auf eine zweite, gleichläufig drehende Abtriebswelle verteilt, worüber eine zweite Extruderschnecke in Rotation versetzt wird. In diesem Fall hätte man es beispielsweise mit einem sogenannten gleichlaufenden Doppelschneckenextruder zu tun.

Eine weitere bevorzugte Ausführungsform ist ein sogenannter gegenlaufender Doppelschneckenextruder, wo über das Getriebe die Schnecken in gegenlaufender Richtung rotieren und dementsprechend die Geometrie der Schnecken angepasst ist.

Ein Doppelschneckenextruder ist beispielsweise aus der EP 0 775 569 A1 bekannt geworden. In dieser Vorveröffentlichung sind zwei sich konisch verjüngende Extruderschnecken gezeigt, die leicht winkelig, also nicht parallel zueinander angeordnet sind, deren umlaufende Schnecken sich in einem mittleren Abschnitt überlappen und zusammenwirken. Jeder Extruderschnecke ist an der gleichen Seite ein Antriebsmotor zugeordnet, der die betreffende Schnecke in Rotation versetzt. Zwischen den beiden Extruderwellen und den jeweiligen Motoren ist auf einer Antriebswelle sitzend jeweils ein Zahnrad vorgesehen, wobei die beiden den beiden Extruderwellen zugeordneten Zahnräder miteinander kämmen. Durch diese beiden Zahnräder wird also eine Synchronisationseinrichtung für die beiden Rotoren bereitgestellt, um sicherzustellen, dass die beiden Extruderschnecken rotationsrichtig zusammenwirken und die beiden ineinander kämmenden Schnecken nicht miteinander kollidieren können.

Abweichend von diesem Stand der Technik können die beiden Extruderwellen auch parallel zueinander angeordnet sein, wobei sich in diesem Fall der Durchmesser der umlaufenden wendelförmigen Schnecken von der Antriebsseite ausgehend nicht verjüngt.

Aus der gattungsbildenden US 3 734 635 A ist ein Doppelextruder als bekannt zu entnehmen, dessen beide Extruderschnecken in einem gemeinsamen Gehäuse parallel zueinander verlaufend angeordnet sind.

Auf der Einlassseite ragt dabei eine Antriebswelle für die eine Extruderschnecke heraus, wobei die Antriebswelle für die andere Extruderschnecke an der gegenüberliegenden Stirnseite aus dem Gehäuse heraus geführt ist. Für den Antrieb dieser beiden Extruderschnecken ist ein Motor vorgesehen, der über eine Zwischenübertragungseinrichtung die beiden aus dem Gehäuse heraus ragenden Antriebswellen der beiden Extruderschnecken antreibt.

Daneben ist eine zweite Motor- oder Antriebseinrichtung vorgesehen, worüber jeweils eine vergleichsweise dünne Welle angetrieben werden soll, die in einer in der jeweiligen Extruderschnecke vorgesehenen Axialohrung hindurch geführt wird. Diese Welle ist jeweils an dem geschlossenen Ende der zugehörigen Extruderschnecke mit der betreffenden Extruderschnecke verbunden, um hier zu einer Drehmoment-Unterstützung beitragen zu können.

Aus der US 2007/0019500 A1 ist ein Doppelextruder als bekannt zu entnehmen, der einen Motor aufweist der über ein Verzweigungsgetriebe die beiden Extruderschnecken antreibt.

Die US 4 022 440 beschreibt eine Anordnung mit einer parallelen Verbindungswelle, parallel zu den Extruderschnecken.

In der US 4 695 240 ist ebenfalls eine Anordnung beschrieben, bei der zu den Extruderschnecken parallel verlaufend (also am Außengehäuse der Extruderschnecken vorbei) eine Welle vorgesehen ist.

Schließlich zeigt die EP 1 454 733 A1 eine Anordnung mit zwei Extruderschnecken mit zumindest einem Antriebsmotor mit einem Starter und einem Rotor.

Demgegenüber ist es Aufgabe der vorliegenden Erfindung, einen Mehrschneckenextruder im Allgemeinen und einen Doppelschneckenextruder im Besonderen zu schaffen, bei welchem mit geringerem Aufwand ein Antrieb von mehreren, d.h. zumindest von zwei Extruderschnecken erfolgen kann. Dabei soll die synchrone Drehzahl der Schnecken auch bei unterschiedlichen Betriebsmomenten in sehr engen Toleranzen eingehalten werden können.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Erfindungsgemäß ist eine Synchronisations- und Torsionsübertragungseinrichtung zwischen den beiden Schneckenachsen vorgesehen, und zwar einmal auf der Einlass- und zum anderen auf der Ausstoßseite. Diese Synchronisationsund Torsionsübertragungseinrichtung besteht bevorzugt aus zwei miteinander kämmenden Zahnrädern im Falle eines gegenlaufenden Doppelschneckenextruders und besteht bevorzugt aus drei miteinander kämmenden Zahnrädern im Falle eines gleichlaufenden Doppelschneckenextruders, wobei jeweils ein Zahnrad mit der einen Extruderwelle und ein Zahnrad mit der anderen Extruderwelle drehfest in Verbindung steht.

Über diese Zahnräder erfolgt also stets auch eine Kraftübertragung, die der Herbeiführung der gewünschten Synchronisation mit dient.

Ferner ist nunmehr vorgesehen, dass für die entsprechende Anzahl der Extruderschnecken eine entsprechende Anzahl von Motoren vorgesehen ist, wobei jeder Extruderschnecke zumindest ein Motor zugeordnet ist.

Bevorzugt ist vorgesehen, dass bei einem Doppelschneckenextruder der eine Motor im Direktantrieb mit der ersten Extruderschnecke beispielsweise an der Einlassseite des Schneckenextruders in Verbindung steht und ein zweiter Motor mit der zweiten Extruderschnecke an der Ausstoßseite über einen Direktantrieb gekoppelt ist.

Die erwähnten Direktantriebe sowie die Synchronisationsund Torsionsübertragungseinrichtung sind jeweils durch Lager abgestützt, wobei die Lager bevorzugt in den Direktantrieben integriert sein können.

Schließlich sind auch Dichtungen zur Abdichtung der Lagerschalen gegenüber der Schmelze vorgesehen, wobei die Dichtungen auf der jeweiligen Ausstoß- und somit Hochdruckseite entsprechend für höhere Drücke ausgelegt sein müssen, bevorzugt sich also über einen längeren axialen Dichtungsweg gegenüber der jeweiligen Extruderwelle erstrecken als auf der Einlassseite.

Insbesondere können die Dichtungen auch in Form von Kaskadendichtungen ausgestaltet sein, um insbesondere auf der Auslass- oder Ausstoßseite die Drücke aufnehmen zu können, die beispielsweise im Normalbetrieb in der Größenordnung von bis zu 60 bar, im Hochlastbetrieb bei bis zu 150 bar liegen können, wobei thermische Lasten bis zu 300°C und mehr auftreten können.

Ebenso möglich wäre grundsätzlich auch, die beiden Motoren auf der gleichen Seite, beispielsweise der Einlass- oder der Ausstoßseite des Schneckenextruders anzuordnen, wobei auch in diesem Falle die beiden, nahe der Einlass- und nahe der Ausstoßseite zugeordneten Gleichlauf- und Torsionsübertragungseinrichtungen vorzugsweise in Form der Zahnräder vorgesehen sind.

Schließlich soll noch darauf hingewiesen werden, dass auf anderen technischen Gebieten Anordnungen zur Vorwärtsbewegung von Schüttgut oder Anordnungen zum Schneiden von Materialien bekannt sind, die beispielsweise zwei Wellen umfassen. Es handelt sich dabei also um völlig andere Anordnungen, die mit Extrudern als solchen nichts gemeinsam haben. So ist beispielsweise aus der GB 892 506 als bekannt zu entnehmen, mit welcher beispielsweise ein flüssiges Medium, in welchem Partikel in einer Suspension vorliegen, behandelt und vorwärts bewegt werden sollen.

Dazu umfasst die Vorrichtung zwei parallel in einem Gehäuse angeordnete Wellen, die jeweils mit einer umlaufenden im Abstand zur eigentlichen Welle unter Ausbildung eines Abstandsraumes ausgebildete Spiralen umfassen. Beide Wellen mit den Spiralen greifen ineinander ein und sollen gegensinnig zueinander drehen, um den Materialtransport zu gewährleisten.

Allgemein sollen diese beiden Wellen miteinander verbunden sein, um eine synchrone gegensinnige Rotation zu ermöglichen. Wie diese Synchronisation stattfinden soll, ist weder beschrieben noch aus den Zeichnungen zu entnehmen.

Aus der FR 96 593 E ist eine Vorrichtung zur mechanischen und/oder thermischen Behandlung von flüssigen, förderfähigen halbfesten und festen Stoffen in einem Gehäuse als bekannt zu entnehmen, welches ebenfalls zwei parallel zueinander angeordnete Wellen umfasst, auf welchen wendelförmig zwei einen Trapez-Querschnitt aufweisende Schnecken verlaufen. Dabei erfolgt der Antrieb der beiden Wellen nur über einen einzigen Motor, dessen Antriebskraft über ein eingangsseitig angeordnetes Zahnradpaar auf die beiden Wellen verteilt wird. Hintergrund dieser Konstruktion ist, dass während der Rotation der Wellen zeitweilig die Winkelgeschwindigkeit bzw. Umdrehungsgeschwindigkeit mindestens einer der Welle verändert werden muss. Dabei dreht sich die eine Welle mit konstanter Winkelgeschwindigkeit, während die andere Welle ihren Antrieb über ein Summierungs-Differenzial-Getriebe erhält, das zeitweilig eine Winkelgeschwindigkeitskomponente zu dem konstanten Wert der Winkelgeschwindigkeit addiert oder subtrahiert. Dazu ist ein Hilfsmotor vorgesehen, der separat ansteuerbar ist und über das der zweiten Welle zugeordnete eingangsseitig zwischengeschaltete Summierungs-Differenzial-Getriebe zusätzlich auf die zweite Welle einwirkt, um die Umdrehungsgeschwindigkeiten unterschiedlich voneinander einstellen zu können, also gerade nicht synchron zueinander.

Schließlich ist aus einer japanischen Vorveröffentlichung JP 2000 064342 ebenfalls eine Anordnung mit zwei parallelen Wellen als bekannt zu entnehmen, auf denen radial vorstehende Flügelelemente auf der einen Welle versetzt sitzend zu den Flügelelementen auf der anderen Welle angeordnet sind, um eine gegenseitige Berührung zu verhindern. Die beiden Wellen könnten dabei mit unterschiedlicher Drehzahl angetrieben werden, da eine Kollision zwischen den Flügelelementen durch den Axialversatz per se nicht stattfinden kann.

Für den Antrieb dieser Vorrichtung ist ebenfalls nur ein einziger Motor vorgesehen, dessen Antriebskraft über ein eingangsseitig sitzendes Zahnradpaar auf die beiden Wellen aufgeteilt wird. Beide Wellen weisen auch am motorfreien Wellenende ebenfalls ein Zahnradpaar auf, die miteinander kämmen.

Bei derartigen Vorrichtungen, die per se nur einen Motor aufweisen, stellt sich nur die Frage der Kraftaufteilung und des Antriebs auf mehrere, beispielsweise zwei Wellen, während sich die Frage einer Synchronisation von zwei separat angetriebenen Wellen sich von Hause aus nicht stellt.

Die Erfindung wird nachfolgend anhand von Ausführungsbeispielen näher erläutert. Dabei zeigen im Einzelnen:
- Figur 1 :: ein erstes schematisches Ausführungsbeispiel eines erfindungsgemäßen Mehrschneckenextruders in Form eines Doppelschneckenextruders in Draufsicht mit zwei parallel zueinander angeordneten Extruderschnecken;
- Figur 1a :: eine auszugsweise Querschnittsdarstellung der beiden miteinander kämmenden Zahnräder, die sowohl einlass- als auch ausstoßseitig an entsprechenden Wellen der miteinander angetriebenen Extruderschnecken sitzen;
- Figur 2 :: eine um 90°-verdrehte Ansicht entsprechend der Pfeildarstellung II in Figur 1 mit einer alternativ vorgesehenen Einlass- und Ausstoßöffnung;
- Figur 3 :: ein zu Figur 1 abgewandeltes Ausführungsbeispiel, bei welchem die beiden Motoren an der gleichen Seite des Schneckenextruders angeordnet sind;
- Figur 4:: ein Referenzbeispiel bei dem die beiden Motoren an den beiden gegenüberliegenden Stirnseiten einer einzelnen Extruderschnecke vorgesehen sind und die zweite Extruderschnecke einlass- und ausstoßseitig über eine Synchronisations- und/oder Torsionsübertragungseinrichtung gekoppelt ist;
- Figur 5 :: ein abgewandeltes Ausführungsbeispiel, bei welchem nicht zwei gegenlaufende, sondern zwei gleichlaufende Extruder gemeinsamen angetrieben werden, und zwar unter Verwendung zumindest eines oder beispielsweise zweier zusätzlich vorgesehener Umlenkritzel;
- Figur 6 :: eine Querschnittsdarstellung zur Verdeutlichung der Antriebs-Verbindung zwischen den beiden Extruderschnecken unter Verwendung eines Umlenkritzels;
- Figur 7 :: eine entsprechende Darstellung zu Figur 6 unter Verwendung von zwei Umlenkritzeln; und
- Figur 8 :: eine weitere Darstellung bezüglich eines gleichlaufenden Extruders unter Verwendung eines innenverzahnten Zahnrades.

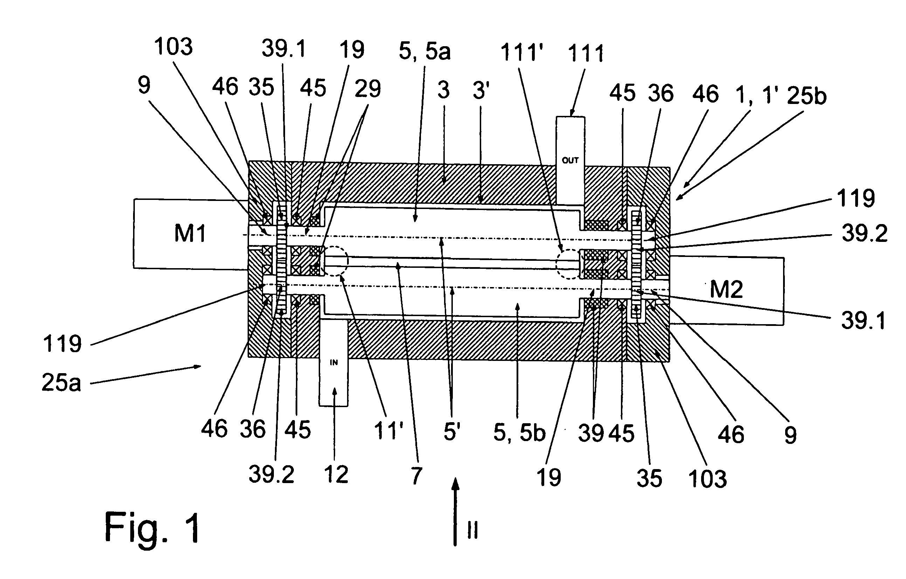

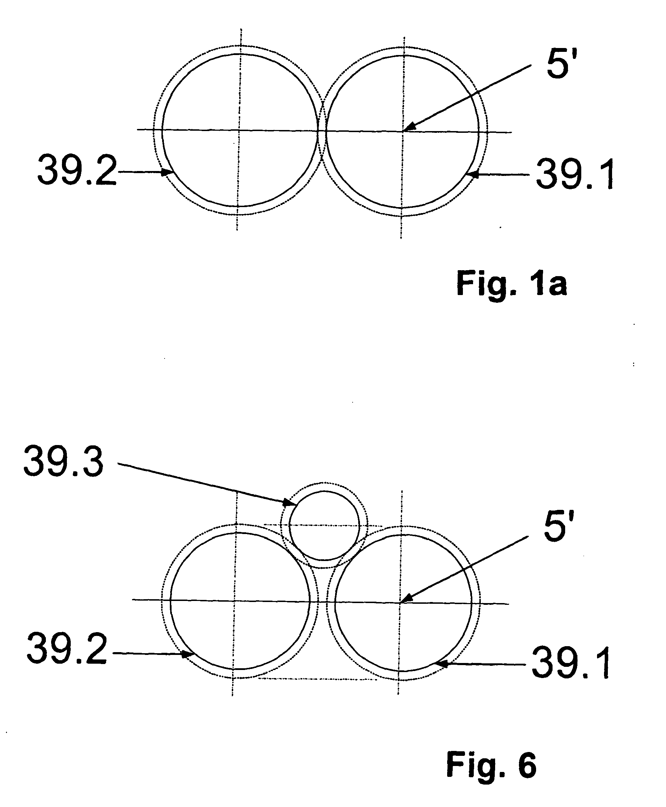

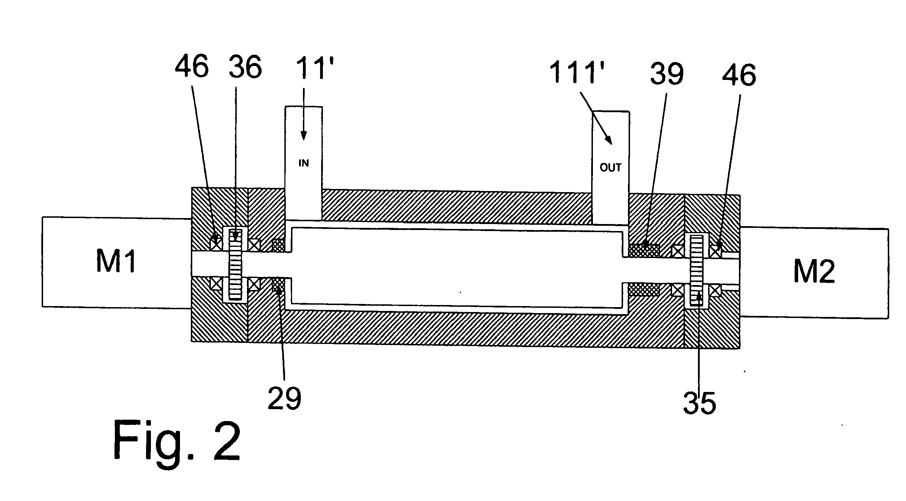

In den Figuren 1 und 2 ist ein erstes schematisches Ausführungsbeispiel gezeigt.

Bei der Ausführungsvariante gemäß Figur 1 ist ein Mehrschneckenextruder 1 gezeigt, der im gezeigten Ausführungsbeispiel nach Art eines Doppelschneckenextruders 1' gebildet ist.

Der Mehrschneckenextruder 1 umfasst dabei ein Gehäuse 3, in dessen Längsrichtung zwei Schnecken 5, d.h. eine erste Extruderschnecke 5a und eine zweite Extruderschnecke 5b angeordnet sind, die im gezeigten Ausführungsbeispiel parallel zueinander verlaufende Schneckenachsen 5' aufweisen.

Die Schnecken 5 stehen im Eingriff miteinander, nämlich in einem sogenannten Eingriffsabschnitt 7, in welchem die an den Schnecken üblicherweise ausgebildeten, gewindeförmig verlaufenden und in den Zeichnungen nicht näher gezeigten Schneckenstege ausgebildet sind.

Mit anderen Worten umfassen die Schnecken 5 in bekannter Weise einen sogenannten Schneckenkern, auf welchem in Umfangsrichtung umlaufend ein Schneckensteg ausgebildet ist, der sich in Radialrichtung über den Schneckenkern hinaus erhebt. Somit greift also jeweils ein Schneckensteg in den Abstandsraum zwischen zwei Wendelabschnitten eines Schneckensteges einer benachbarten Schnecke ein, und zwar berührungslos.

Im gezeigten Ausführungsbeispiel sind also die Schneckenkörper (die teilweise auch als Schneckenkern bezeichnet werden) zylinderförmig gestaltet. Abweichend davon könnten die Schnecken bzw. die Schneckenkörper zumindest auch leicht konisch gebildet sein, so dass die Schneckenachsen 5' nicht parallel zueinander, sondern in einem spitzen Winkel von in der Regel nur einigen Graden zueinander ausgerichtet sind. Die Schnecken, d.h. die Schneckenkörper oder die sogenannten Schneckenkerne sind dann leicht konisch geformt, so dass die zugehörigen Zentral- oder Rotationsachsen 5' in dem in den Figuren nicht näher gezeigten Ausführungsbeispiel dann einen spitzen Winkel von beispielsweise weniger als 20° (insbesondere weniger als 15° oder weniger als 10°) einschließen. Bei dem Ausführungsbeispiel in Figur 1 liegen demgegenüber die Zentralachsen 5' parallel zueinander.

Das zu verarbeitende Granulat kann beispielsweise über einen Zuführkanal 12 dem Gehäuseinnenraum 3' zugeführt werden, welches dann von den Schnecken aufbereitet wird und dabei durch die gegensinnige Rotationsbewegung der zusammenwirkenden Schnecken 5 längs der Schnecken 5 zur Austrittseite befördert wird, nämlich zu einem Austrittskanal 111 auf der Ausstoßseite, wo die Schmelze austritt.

Mit anderen Worten ist also aus Figur 1 ein Doppelschneckenextruder zu ersehen, der ein Gehäuse 3 mit einem Gehäuseinnenraum 3' in Form zweier Gehäusebohrungen umfasst, die zumindest in einem Abschnitt des Gehäuses 3 vorgesehen sind. Diese Gehäusebohrungen überlappen sich dabei zumindest in einer Teil-Axiallänge des Gehäuses 3 unter Ausbildung des erwähnten Eingriffabschnittes 7, wobei in den beiden Gehäusebohrungen jeweils eine der erwähnten Extruderschnecken 5, im gezeigten Ausführungsbeispiel also die Extruderschnecke 5a bzw. 5b, angeordnet sind.

Im gezeigten Ausführungsbeispiel nach den Figuren 1 und 2 wird die erste Extruderschnecke 5a auf der Einlassseite 25a mit einem ihr zugeordneten Motor M1 angetrieben, wohingegen die zweite Extruderschnecke 5b auf der Ausstoßseite 25b des Doppelschneckenextruders über einen Motor M2 angetrieben wird. Diese Motoren M1 und M2 bestehen im gezeigten Ausführungsbeispiel aus Elektromotoren, die z.B. über eine elektronische (nicht näher gezeigte) Steuerungsvorrichtung angesteuert werden können.

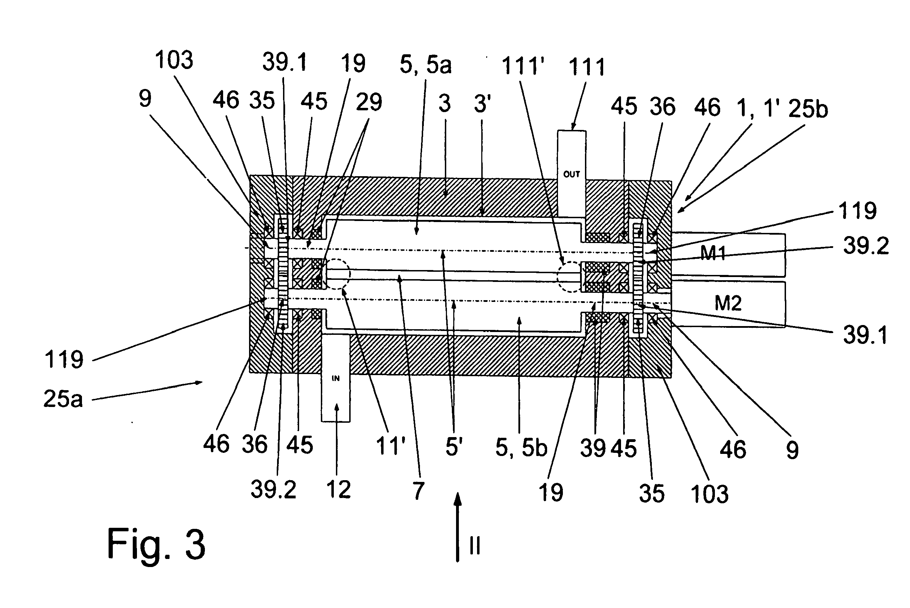

Im gezeigten Ausführungsbeispiel gemäß Figur 1 weisen die beiden Schnecken 5a, 5b jeweils einen Antriebsschaft 19 auf, der in entsprechenden Gehäusebohrungen gelagert und dort abgedichtet ist. Dieser Antriebsschaft 19 stellt gleichzeitig die Antriebswelle 9 dar, die aus der Motorabtriebswelle bestehen kann. Mit anderen Worten sind die Motoren M1 und M2 starr über die Antriebswelle 19 bzw. den Antriebsschaft 9 mit der darüber angetriebenen Schnecke 5a bzw. 5b direkt verbunden bzw. stellen die Wellen 19, also die Extruderwellen 19, bereits den Rotor eines so gebildeten Direktantriebes dar. Bei diesen Ausführungsbeispielen gemäß Figuren 1 bis 2, sowie bei dem nachfolgenden Ausführungsbeispiel gemäß Figur 3, treiben damit die beiden Motoren M1 und M2 die beiden Extruderschnecken 5a und 5b mit gegensinniger Drehrichtung an. Es handelt sich insoweit um sog. "gegenlaufende Extruder".

Aus der Zeichnung ist aber auch zu ersehen, dass die jeweilige Extruderschnecke 5a, 5b auf der Motorenseite nicht nur über einen Antriebsschaft 9 bzw. eine Antriebswelle 19 angetrieben wird (vom Motor her kommend), sondern dass an der gegenüberliegenden Stirnseite die Extruderschnecke 5a, 5b an ihrer nicht angetriebenen Seite in einen verlängerten Extruderwelle 119 in Form eines Lagerschaftes oder Lagerstummels 119 übergeht, der ebenfalls der Lagerung der Extruderschnecke zum einen und zur Durchführung der Synchronisation und/oder einer Torsionsübertragung zum anderen dient, worauf später noch eingegangen wird.

Aus den Zeichnungen ist ersichtlich, dass zur Abdichtung der Lagerschalen gegenüber der Schmelze, also gegenüber dem Extrudergehäuse-Innenraum 3' entsprechende Dichtungen vorgesehen sein müssen. So ist die Antriebsachse 9 bzw. die nachfolgend auch als Extruderwelle 19 bezeichnete Antriebswelle 19 an der Einlassseite 25a über eine einlassseitige Dichtung 29 abgedichtet, wobei diese Dichtung 29 bevorzugt unmittelbar neben dem Gehäuseinnenraum 3' an dem Antriebsschaft 9, d.h. an der Antriebswelle 19, ansetzt. Der nicht angetriebene, der Lagerung dienende Wellenstummel 119 der benachbarten zweiten Extruderschnecke 5b ist ebenfalls an der Einlassseite 25a über eine derartige einlassseitige Dichtung 29 gegenüber dem Gehäuseinnenraum, also der Schmelze abgedichtet, ebenfalls bevorzugt unmittelbar neben dem Gehäuseinnenraum 3 an dem Wellenstummel 119 ansetzend.

Auch auf der Ausstoß- oder Hochdruckseite sind entsprechende Wellendichtungen 39 vorgesehen, die entsprechend hochdruckfest ausgelegt sind und auch den auftretenden thermischen Lasten beispielsweise bis 300°C standhalten müssen. Die Drücke können dabei im Normalbetrieb bis 60 bar und im Hochlastbetrieb beispielsweise bis zu 150 bar erreichen. Von daher sind die an der Ausstoßseite 25b vorgesehenen Dichtungen 39 für den nicht angetriebenen Achsstummel 119 der ersten Extruderschnecke 5a sowie für den Antriebsschaft 9 bzw. die Antriebswelle 19 des zweiten Motors M2 über eine größere axiale Länge dargestellt. Hier können beispielsweise auch Kaskadendichtungen verwendet werden, was grundsätzlich bekannt ist.

Auch diese Dichtungen sind bevorzugt unmittelbar neben dem Gehäuseinnenraum 3' an den jeweiligen Wellen 9, 19 bzw. 119 ansetzend angeordnet.

Nachfolgend wird noch auf die Lager für die Wellen, eine Gleichlauf- sowie auf eine Torsiönsübertragungseinrichtung eingegangen.

Wie aus Figuren 1, 1a und 2 zu ersehen ist, ist beispielsweise die dem ersten Motor M1 auf der Einlassseite 25a zugeordnete Antriebsschaft 9 bzw. Antriebswelle 19 mit einer ersten Torsionsstütze 35 bevorzugt in Form eines drehfest auf dem Antriebsschaft 9 bzw. der Antriebswelle 19 sitzenden Zahnrades 39.1 vorgesehen, welches mit einer übertragungsseitigen Torsionsstütze 36 vorzugsweise ebenfalls in Form eines weiteren Zahnrades 39.2 zusammenwirkt, insbesondere kämmt, welches drehfest auf dem Wellenstummel 119 der zweiten Extruderschnecke (gegenüberliegend zu dem Motor M2) angeordnet ist und dadurch einen gewünschten Gleichlauf zwischen den beiden Extruderschnecken mit herbeiführt, so dass beide Extruderschnecken 5a und 5b mit gleicher Drehzahl, d.h. gleicher Drehgeschwindigkeit aber gegensinniger Drehrichtung angetrieben werden.

Eine gleiche Einrichtung ist auch auf der Ausstoßseite 25b vorgesehen. Auch dort ist für die angetriebene zweite Extruderschnecke 5b eine antriebsseitige Torsionsstütze 35 für den vom Motor M2 angetriebenen Antriebsschaft 9 bzw. die angetriebene Antriebsachse 19 vorgesehen, ebenfalls wieder vorzugsweise in Form eines drehfest mitdrehenden Zahnrades, welches mit einer übertragungsseitigen Torsionsstütze 36 an dem nicht angetriebenen Ende in Form des Wellenstummels 119 der ersten Extruderschnecke 5a zusammenwirkt, insbesondere kämmt, um auch hier eine Kraftübertragungseinrichtung in Form einer Gleichlauf-Synchroneinrichtung sowie einer Torsionsübertragungseinrichtung zwischen beiden Extruderschnecken zu bewerkstelligen. Auch hier werden für die Synchronisations- und Torsionsübertragungseinrichtung 35, 36 wiederum die in Figur 1a gezeigten beiden miteinander kämmenden Zahnräder 39.1 und 39.2 verwendet.

Jeweils benachbart zu diesen übertragungsseitigen wie antriebsseitigen Torsionsstützen 35, 36 - die nachfolgend teilweise auch als Synchronisations- und Torsionsübertragungseinrichtungen bezeichnet werden - sind an den Antriebsschäften 9, also an den Extruder- oder Antriebswellen 19, wie aber auch an den nicht angetriebenen Extruderwellen 119 in Form der Wellenstummel 119 beidseitig jeweils innere Schnecken-Lagerungen 45 (die dem Gehäuseinnenraum 3' näher liegen) sowie äußere (also zum Gehäuseinnenraum 3' entfernt liegend) Schneckenlagerungen 46 vorgesehen.

Aus Figur 1 ist ersichtlich, dass beispielsweise der Einlasskanal 12 zur Zuführung des aufzubereitenden Granulats auf der Einlassseite so vorgesehen ist, dass er in Radialrichtung zu den Extruderschnecken (oder zumindest mit überwiegend radialer Komponente) eine Verbindung zum Gehäuseinnenraum 3' schafft, und zwar zumindest näherungsweise in einer Ebene liegen, in der auch die Zentralachsen 5' der beiden Extruderschnecken 5a, 5b liegen. Entsprechend ist der Ausstoßkanal 111 auf der Ausstoßseite bevorzugt ebenfalls wieder in Radialrichtung zu den Extruderschnecken (oder mit einer größeren Komponente zumindest in Radialrichtung) vorgesehen, wobei dieser Ausstoßkanal 111 im gezeigten Ausführungsbeispiel auf der gegenüberliegenden Längsseite des Schneckenextruders liegt, also gegenüberliegend zum Einlasskanal 12.

In Figur 1 ist strichliert ein alternativer Einlass- und Ausstoßkanal 11', 111' dargestellt, der in Figur 2 in einer alternativen Ausgestaltung wiedergegeben ist.

Hieraus ist zu ersehen, dass der Einlasskanal 11' wie auch der Ausstoßkanal 111' in Vertikalrichtung oder zumindest überwiegend in Vertikalrichtung verläuft, und zwar bevorzugt der Einlasskanal von oben kommend zum tiefer liegenden Gehäuseinnenraum führt und auf der Ausstoßseite der Ausstoßkanal 111 ebenfalls zumindest überwiegend in Vertikalrichtung verlaufenden oder bevorzugt exakt in Vertikalrichtung verlaufend das aufbereitete Extrudergut nach außen hin abführt.

Anhand des Ausführungsbeispieles gemäß Figur 3 ist gezeigt, dass abweichend zu Figur 1 beide Antriebsmotoren M1 und M2 auf der gleichen Seite des Schneckenextruders angeordnet sein können, gemäß dem Ausführungsbeispiel nach Figur 2 beispielsweise auf der Ausstoßseite 25b. Genauso können beide Motoren M1 und M2 den beiden Extruderschnecken 5a, 5b zugeordnet auch beide auf der Einlassseite 25a vorgesehen sein. Der weitere Aufbau entspricht ansonsten dem Ausführungsbeispiel nach Figuren 1 und 2. Sollten die Motorengehäuse einen größeren Durchmesser aufweisen als der Abstand der beiden Extruderachsen, könnte auch eine Anordnung gewählt werden, bei der der eine Antriebsschaft 9, also die eine Antriebswelle 19 in Axialrichtung verlängert ist, so dass der eine Motor gegenüber dem anderen Motor zusätzlich in entsprechender Axiallänge des anderen Motors versetzt zu liegen kommt, somit also in Höhe des dem Extrudergehäuse näherliegenden Motors lediglich der Antriebsschaft 9 bzw. die Antriebswelle 119 an diesem Motor vorbeiläuft.

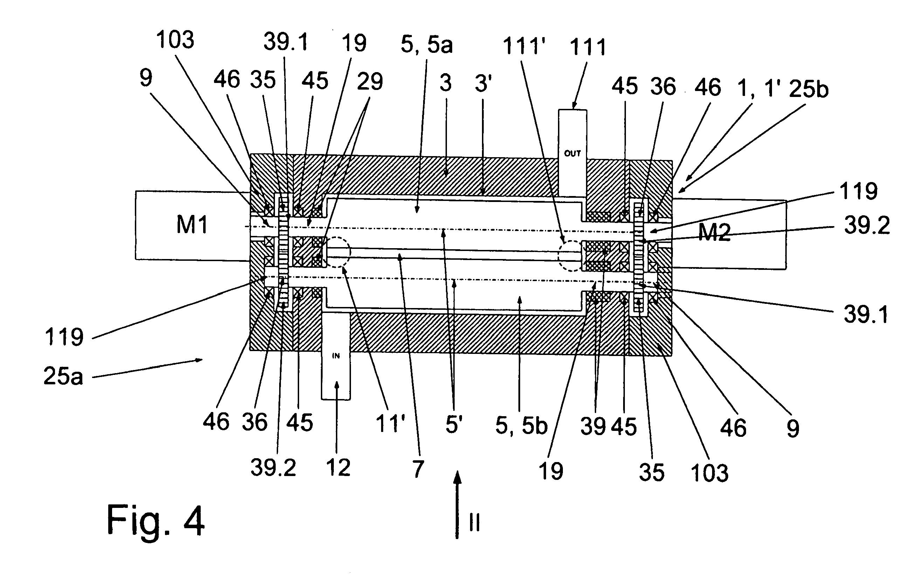

Anhand des Referenzbeispieles gemäß Figur 4 ist ferner schematisch gezeigt, dass beide Motoren M1 und M2 an der Einlass- und der Ausstoßseite einer einzigen Extruderwelle, beispielsweise der Extruderwelle 5a zugeordnet sein können, wobei der zweite Schneckenextruder 5b jeweils über die einlass- und ausstoßseitig vorgesehene Synchronisations- und/oder Torsionsübertragungseinrichtung 35, 36 gekoppelt ist und hierüber im Gleichlauf mit angetrieben wird.

In beiden Fällen sind hierfür zusätzliche Zahnräder 39.1 und 39.2 gezeigt, wobei jeweils das eine Zahnrad 39.1 beispielsweise bei der Antriebswelle 9, 19 drehfest angeordnet ist, also mit der einen Schnecke 5a drehfest verbunden ist und das damit kämmende zweite Zahnrad 39.2 mit der zweiten Schnecke 5b drehfest verbunden ist, beispielsweise dadurch, dass es im Bereich des Achsstummels 119 positioniert ist.

Durch die erwähnten miteinander kämmenden Zahnräder 39.1 und 39.2 wird eine Zwangs-Relativausrichtung einschließlich eines Torsionsausgleichs der Schnecken gewährleistet sein, so dass die Schneckenstege nicht miteinander kollidieren können.

Aus den Ausführungsbeispielen ist auch ersichtlich, dass das Gehäuse 3 einen zentralen Gehäuseabschnitt mit einem stirnseitigen Endbereich umfasst, in welchem der jeweilige Antriebsschaft 9 bzw. die Extruder- oder Antriebsachse 19 wie auch die nicht angetriebenen Extruderwelle in Form des Achsstummel 119 durch die geschilderten Lager 45 gelagert und gegenüber dem Extruderinnenraum abgedichtet sind. An der Einlass- und Ausstoßseite schließt sich mittels der Dichtungen 29, 39 dann in axialer Verlängerung jeweils eine Abdeckung oder Gehäuseerweiterung 103 an, in welcher die jeweilige Synchronisations- und Torsionsübertragungseinrichtung 35, 36 und über die äußeren Lager 46 das Ende der nicht angetriebenen Achsstummel 119 bzw. die motorseitig am nächsten liegenden Lager 46 zur Lagerung der Wellen und Schäfte in einem entsprechenden Aufnahmeraum untergebracht sind. Das zur Synchronisations- und Torsionsübertragungseinrichtung 35, 36 innenliegende, also dem Innenraum 3' der Extruderanordnung näher liegende Lager 45 ist bevorzugt unmittelbar benachbart zur Stirnseite 33 des Gehäuseabschnittes 3 (bei abgenommener deckelförmigen Gehäuseerweiterung 103) angeordnet.

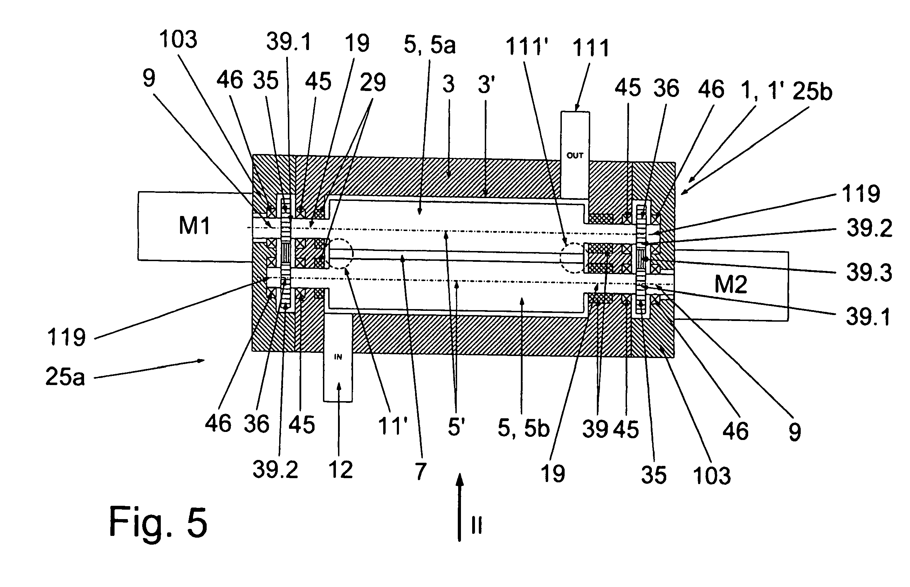

Nachfolgend wird auf Figur 5 Bezug genommen, das ein vom grundsätzlichen Aufbau her vergleichbares Ausführungsbeispiel für einen Doppelschneckenextruder zeigt, wobei im Unterschied zu Figur 1 der in Figur 5 gezeigte Doppelschneckenextruder nicht einen sog. gegenlaufenden Extruder (bei dem die beiden Extruderschnecken mit gegensinniger Drehrichtung angetrieben werden), sondern einen gleichlaufenden Extruder zeigt, bei der die beiden Extruderschnecken 5a und 5b nicht nur mit gleicher Geschwindigkeit, sondern vor allem gleicher Drehrichtung zueinander angetrieben werden.

Dies kann gemäß Figur 5 durch ein drittes Zahnrad 39.3 erfolgen, wobei die jeweiligen Synchronisations- und Torsionsübertragungseinrichtungen 35, 36 in Form der bevorzugt verwendeten Zahnräder 39.1 und 39.2 in Abweichung zu dem Ausführungsbeispiel nach Figuren 1 bis 2 nicht miteinander kämmen, sondern zumindest in geringem Abstand zueinander angeordnet sind, so dass eine Triebverbindung von dem einen Zahnrad 39.1 über das Zwischen-Zahnrad oder Umlenkritzel 39.2 zu dem nächsten Zahnrad 39.3 erfolgt, welches mit der zweiten Extruderwelle drehfest verbunden ist. Diese Funktion ist in Querschnittsdarstellung gemäß Figur 6 für das einlass- wie aber auch für die ausstoßseitige Synchronisations- und Torsionsübertragungseinrichtung 35, 36 gezeigt.

Eine besonders symmetrische Synchronisations- und Torsionsübertragung wird dadurch realisiert, wenn beispielsweise bei dem Ausführungsbeispiel gemäß Figur 5 in Abweichung zu dem Beispiel gemäß Figur 6 noch ein zweites Umlenk- oder Zwischenrahnrad 39.3', also ein weiteres Umlenkritzel 39.3', verwendet wird, so dass gegenüberliegend zu dem ersten Ritzel 39.3 auf der anderen Seite der beiden Zahnräder 39.1 und 39.2 ein weiteres Ritzel 39.3' vorgesehen ist, das ebenfalls mit den beiden Zahnrädern 39.1 und 39.2 kämmt. Die beiden Zahnräder 39.1 und 39.2 stehen selbst außer Eingriff zueinander.

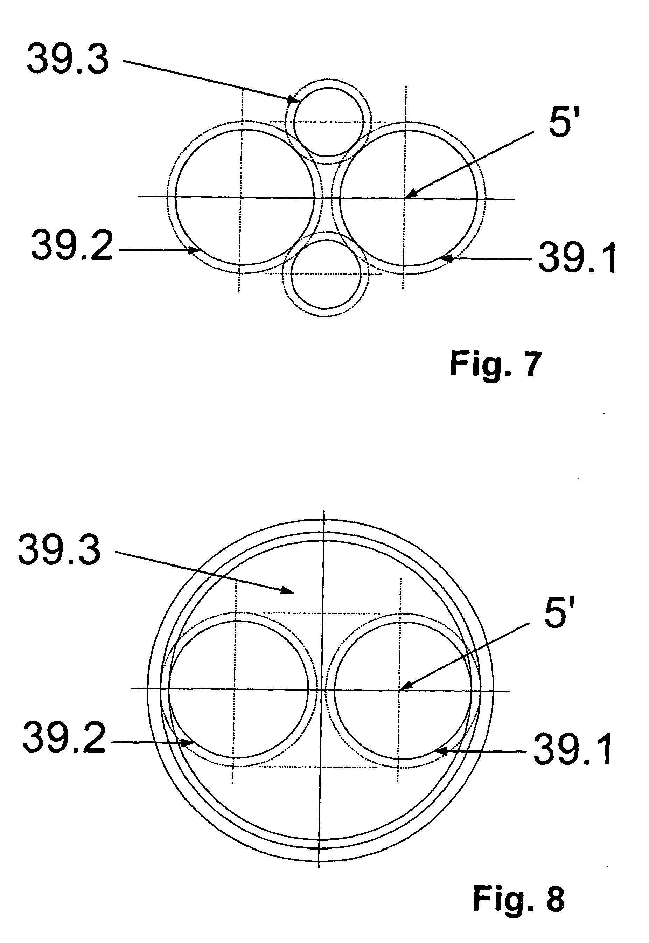

Anstelle dieser Ausführungsform kann ebenfalls eine symmetrische Kraftübertragung und damit eine optimale Synchronisations- und Torsionsübertragung auch dadurch realisiert werden, dass beispielsweise abweichend von Figur 7 ein innen verzahntes Zahnrad 39.3" verwendet wird, welches mit den außen verzahnten Zahnrädern 39.1 und 39.2 vorzugsweise an deren gegenüberliegenden (also weiter voneinander entfernt liegenden) Bereichen kämmt. In diesem Falle wären bevorzugt zwei derartige innenverzahnte Zahnräder sowohl einlass- als auch ausstoßseitig vorgesehen. Aber selbst gemischte Systeme wären möglich, so dass beispielsweise an der Einlass- oder auf der Ausstoßseite ein innen verzahntes Zahnrad und an der jeweils gegenüberliegenden Seite, also beispielsweise auf der Ausstoßseite oder der Einlassseite gemäß Figuren 6 oder 7 nur ein Umlenkritzel oder beispielsweise zwei Umlenkritzel verwendet werden, die mit den beiden gleichlaufenden (also in gleicher Umdrehungsrichtung) angetriebenen Zahnrädern 39.1 und 39.2 kämmen.

Die anhand der Figuren 6 und 7 geschilderten Maßnahmen für einen gleichlaufenden Extruder können ebenso auch bei den Beispiele gemäß Figuren 3 und 4 zum Einsatz kommen.

Wie aus den beschriebenen Ausführungsbeispielen der Erfindung hervorgeht, sind die Motoren mit der jeweiligen Extruderschnecke 5a bzw. 5b starr verbunden. Sofern die Motoren wie bei dem Ausführungsbeispiel nach Figur 3 nebeneinander angeordnet sind, darf dabei der Durchmesser der einzelnen Motoren bei symmetrischem Gehäuseaufbau maximal dem Achsabstand der Schnecken entsprechen. Ansonsten müssten die Motoren im unterschiedlichen Axialabstand mit Seitenversatz zueinander angeordnet sein, so dass ein Motorgehäuse grundsätzlich auch einen Durchmesser aufweisen kann, welcher größer ist als der Achsabstand zweier benachbarter Schnecken, sofern in diesem Seitenbereich die an dem Motorengehäuse vorbei laufende Antriebswelle, die zu einem mit Axialversatz vorgesehenen zweiten Motor führt, einen geringeren Außendurchmesser aufweist.

Ebenso könnten beispielsweise im Fall eines Doppelschneckenextruders die beiden Motoren, die jeweils einer separaten Extruderschnecke zugeordnet sind, jeweils über eine Gelenkwelle angetrieben werden. Dadurch kann der Durchmesser der einzelnen Motoren oft größer als der Achsabstand der Schnecken sein. In einer vereinfachten Ausführungsform wäre es auch möglich, nur einen Motor über eine Gelenkwelle mit einer Extruderschnecke zu verbinden, wohingegen der zweite Motor direkt mit der Extruderschnecke gekoppelt ist.

Die Erfindung ist anhand eines Doppelextruders beschrieben worden. Es kann sich dabei aber auch um einen Mehrfachextruder handeln, der mehr als zwei Extruderschnecken umfasst. In diesem Falle sind die geschilderten Umsetzungsvarianten beliebig erweiterbar. Möglich ist somit auch ein Mehrschneckenextruder, der neben zumindest einer weiteren Extruderschnecke zumindest zwei Extruderschnecken in einem Aufbau umfasst, wie sie anhand der Figuren 1 bis 3 erläutert wurden.

Die verschiedenen Ausführungsbeispiele sind für den Fall erläutet worden, dass für die Synchronisations- und Torsionsübertragungseinrichtung 35, 36 entweder die direkt miteinander kämmenden Zahnräder 39.1 und 39.2 (bei gegensinnig angetriebenen Extruderschnecken) oder die Zahnräder 39.1, 39.2 und 39.3 bzw. 39.3' oder 39.3" (bei gleichsinnig angetriebenen Extruderschnecken) verwendet werden. Unabhängig davon können aber auch alle anderen technischen Maßnahmen zur Herbeiführung einer entsprechenden Synchronisations- und Torsionsübertragungseinrichtung 35, 36 verwendet werden, beispielsweise in Form von Ketten, Riemen oder sonstigen geeigneten Synchronisations- und Antriebsverbindungen.

## Patentansprüche

1. Mehrschneckenextruder, insbesondere Doppelschneckenextruder, mit folgenden Merkmalen:
- mit einem Gehäuse (3),
- mit mehreren im Gehäuse (3) vorgesehenen Gehäusebohrungen, die zumindest in einem Abschnitt des Gehäuses (3) vorgesehen sind,
- die Gehäusebohrungen überlappen sich zumindest in einer Teil-Axiallänge des Gehäuses (3),
- in den mehreren Gehäusebohrungen ist jeweils eine Extruderschnecke (5a, 5b) angeordnet,
- für die zumindest beiden Extruderschnecken (5a, 5b) sind zumindest zwei Motoren (M1, M2) vorgesehen,
- sowohl auf der Einlassseite (25a) als auf der Ausstoßseite (25b) ist jeweils eine Synchronisations- und Torsionsübertragungseinrichtung (35, 36) vorgesehen, worüber eine Synchronisation der zumindest beiden zusammenwirkenden Extruderschnecken (5a, 5b) erzielbar ist,
**gekennzeichnet durch** die folgenden weiteren Merkmale:
- die zumindest beiden Extruderschnecken (5a, 5b) sind sowohl auf der Einlassseite (25a) als auch auf der Ausstoßseite (25b) gelagert, wozu die an den beiden gegenüberliegenden Stirnseiten von der jeweiligen Extruderschnecke (5a, 5b) überstehende Extruderwelle (19, 119) in einem Lager (45, 46) gelagert ist,
- die auf der Einlassseite (25a) vorgesehenen zumindest beiden Extruderwellen (19, 119), von denen die eine Welle (19) mit der einen Extruderschnecke (5a) und die andere Extruderwelle (119) mit der anderen Extruderschnecke (5b) verbunden ist und mit dieser mitdreht, sind über die auf der Einlassseite (25a) vorgesehene Synchronisations- und Torsionsübertragungseinrichtung (35) miteinander gekoppelt,
- die auf der Ausstoßseite (25b) vorgesehenen zumindest beiden Extruderwellen (19, 119), von denen die eine Extruderwelle (119) mit der einen Extruderschnecke (5a) und die andere Extruderwelle (19) mit der anderen Extruderschnecke (5b) verbunden ist und mit dieser mitdreht, sind über die dort vorgesehene Synchronisations- und Torsionsübertragungseinrichtung (36) miteinander gekoppelt,
- jeder der zumindest beiden Motoren (M1, M2) ist in Form eines Direktantriebs mit einer Extruderschnecke (5; 5a; 5b) gekoppelt.

2. Mehrschneckenextruder nach Anspruch 1, **dadurch gekennzeichnet, dass** der eine Motor (M1) auf der Einlassseite (25a) die eine der zumindest beiden Extruderschnecken (5a) und dass der zumindest eine weitere Motor (M2) die zumindest eine andere Extruderschnecke (5b) auf der gegenüberliegenden Ausstoßseite (25b) antreibt.

3. Mehrschneckenextruder nach Anspruch 1, **dadurch gekennzeichnet, dass** die zumindest beiden Motoren (M1, M2) für die zumindest beiden Extruderschnecken (5a, 5b) beide auf der Einlass- oder beide auf der Ausstoßseite (25a, 25b) angeordnet sind, wobei der zumindest eine Motor (M1) in Triebverbindung mit der zumindest einen ersten Extruderschnecke (5a) und der zumindest eine zweite Motor (M2) in Triebverbindung mit der zumindest einen zweiten Extruderschnecke (5b) steht.

4. Mehrschneckenextruder nach einem der Ansprüche 1 bis 3, **dadurch gekennzeichnet, dass** der der jeweiligen Extruderschnecke (5; 5a, 5b) zugeordnete Motor (M; M1, M2) starr und/oder getriebefrei mit der jeweiligen zugeordneten Extruderschnecke (5; 5a, 5b) verbunden ist, vorzugsweise in Form eines Direktantriebes, bei dem die dem jeweiligen Motor (M1, M2) zugeordnete Motorwelle (9) in axialer Verlängerung mit der eine Antriebswelle (19) bildenden Extruderwelle (19) einer zugehörigen Extruderschnecke (5a, 5b) gekoppelt ist oder in diese übergeht.

5. Mehrschneckenextruder nach einem der Ansprüche 1 bis 4, **dadurch gekennzeichnet, dass** die Extruderschnecken (5a, 5b) auf ihrer Antriebsseite einen Antriebsschaft (9) bzw. eine Antriebswelle (9) als Extruderwelle aufweisen, deren Lagerschalen über Dichtungen (29, 39) gegenüber dem Gehäuseinnenraum (3') abgedichtet sind.

6. Mehrschneckenextruder nach einem der Ansprüche 1 bis 4, **dadurch gekennzeichnet, dass** die Extruderschnecken (5a, 5b) auf ihrer Nichtantriebsseite als Extruderwelle (119) einen Wellenstummel (119) aufweisen, deren Lagerschalen über Dichtungen (29, 39) gegenüber dem Gehäuseinnenraum (3') abgedichtet sind.

7. Mehrschneckenextruder nach Anspruch 5 oder 6, **dadurch gekennzeichnet, dass** auf der Ausstoßseite (25b) die Dichtungen (29, 39) zur Aufnahme der dort auftretenden erhöhten Drücken und/oder thermischen Lasten ausgelegt sind.

8. Mehrschneckenextruder nach Anspruch 7, **dadurch gekennzeichnet, dass** die Dichtungen (29, 39) auf der Ausstoßseite (25b) als Kaskadendichtungen und/oder als Kühlspaltdichtungen ausgebildet sind.

9. Mehrschneckenextruder nach einem der Ansprüche 6 bis 8, **dadurch gekennzeichnet, dass** die Dichtungen (29, 39) an dem Antriebsschaft bzw. der Antriebswelle (9, 19) wie dem nicht angetriebenen Wellenstummel (119) benachbart, vorzugsweise unmittelbar benachbart zum Gehäuseinnenraum (3') angeordnet sind.

10. Mehrschneckenextruder nach einem der Ansprüche 1 bis 9, **dadurch gekennzeichnet, dass** die Synchronisations- und Torsionsübertragungseinrichtung (35) im Bereich des Antriebsschaftes (9) und/oder der Antriebswelle (19) angeordnet ist, worüber die jeweilige Extruderschnecke (5a, 5b) mit dem zugehörigen Motor (M1, M2) in Triebverbindung steht.

11. Mehrschneckenextruder nach einem der Ansprüche 1 bis 10, **dadurch gekennzeichnet, dass** die eine Synchronisations- und Torsionsübertragungseinrichtung (36) im Bereich der als Achsstummel (119) ausgebildeten Extruderwelle (119) vorgesehen ist, der auf der nicht angetriebenen Seite einer zugehörigen Extruderschnecke (5a, 5b) in axialer Richtung zur Lagerung der Extruderschnecke (5a, 5b) stirnseitig axial übersteht.

12. Mehrschneckenextruder nach Anspruch 10 oder 11, **dadurch gekennzeichnet, dass** die Synchronisations- und Torsionsübertragungseinrichtung (35, 36) in einer Gehäuseerweiterung (103) angeordnet ist, welche an den Stirnseiten des Extrudergehäuses (3) angebaut ist.

13. Mehrschneckenextruder nach Anspruch 12, **dadurch gekennzeichnet, dass** das zuäußerst liegende Lager (46) für den Antriebsschaft (9) bzw. die Antriebswelle (19) sowie den Achsstummel (119) im Bereich der Gehäuseerweiterung (103) vorgesehen ist, und dass ein auf der gegenüberliegenden Seite der Synchronisations- und Torsionsübertragungseinrichtung (35, 36) dem Extruderinnenraum (3') näher liegendes weiteres Lager (45) in den Stirnseiten-Durchlassbereich des Extrudergehäuses (3) untergebracht ist.

14. Mehrschneckenextruder nach einem der Ansprüche 1 bis 13, **dadurch gekennzeichnet, dass** der Mehrschneckenextruder zumindest zwei gegenlaufende Extruderschnecken (5a, 5b) umfasst, die über die Motoren (M1, M2) mit gegensinniger Drehrichtung angetrieben werden.

15. Mehrschneckenextruder nach einem der Ansprüche 1 bis 14, **dadurch gekennzeichnet, dass** die Synchronisationsund/oder Torsionsübertragungeinrichtungen aus Zahnrädern (39.1, 39.2) bestehen, wobei jeweils auf der Einlassseite (25a) wie auf der Ausstoßseite (25b) sowohl auf der motorseitigen Antriebswelle (19) als auch auf der gegenüberliegend zur Antriebsseite liegenden Wellenstummel (119) ein Zahnrad (39.1) drehfest angeordnet ist, welches mit dem auf gleicher Höhe drehfest auf der benachbarten Extruderschnecke angeordneten Zahnrad (39.2) kämmt.

16. Mehrschneckenextruder nach einem der Ansprüche 1 bis 14, **dadurch gekennzeichnet, dass** der Mehrschneckenextruder zumindest zwei gleichlaufende Extruderschnecken (5a, 5b) umfasst, die über die Motoren (M1, M2) mit gleicher Drehrichtung angetrieben werden.

17. Mehrschneckenextruder nach einem der Ansprüche 1 bis 16, **dadurch gekennzeichnet, dass** dass die Synchronisations- und/oder Torsionsübertragungeinrichtungen aus Zahnrädern (39.1, 39.2) bestehen, wobei jeweils auf der Einlassseite (25a) und/oder auf der Ausstoßseite (25b) auf der Antriebswelle (19) und/oder dem Wellenstummel (119) ein Zahnrad (39.1) drehfest angeordnet ist, welches mit dem auf gleicher Höhe drehfest auf der benachbarten Extruderschnecke angeordneten Zahnrad (39.2)
- unter Zwischenschaltung eines Umlenkritzels (39.3) oder
- unter Zwischenschaltung zweier gegenüberliegender Umlenkritzel (39.3, 39.3'), die jeweils mit beiden Zahnrädern (39.1 und 39.2) kämmen, oder
- mittels eines innen verzahnten Zahnrades (39.3") in Eingriff steht.

## Claims

1. Multiple-screw extruder, in particular double-screw extruder, having the following features:
- having a housing (3),
- having a plurality of housing holes which are provided in the housing (3) and which are provided at least in a portion of the housing (3),
- the housing holes overlap at least in a partial axial length of the housing (3),
- an extruder screw (5a, 5b) is arranged in the plurality of housing holes,
- at least two motors (M1, M2) are provided for the at least two extruder screws (5a, 5b),
- there is provided both at the inlet side (25a) and at the discharge side (25b) a respective synchronization and torsion transmission device (35, 36), by means of which synchronization of the at least two co-operating extruder screws (5a, 5b) can be achieved,
**characterized by** the following additional features:
- the at least two extruder screws (5a, 5b) are mounted both at the inlet side (25a) and at the discharge side (25b), for which purpose the extruder shaft (19, 119) which protrudes at the two opposite end faces of the respective extruder screws (5a, 5b) is mounted in a bearing (45, 46),
- the at least two extruder shafts (19, 119) provided at the inlet side (25a), of which one shaft (19) is connected to one extruder screw (5a) and the other extruder shaft (119) is connected to the other extruder screw (5b) and rotates therewith, are interconnected via the synchronization and torsion transmission device (35) provided at the inlet side (25a),
- the at least two extruder shafts (19, 119) provided at the discharge side (25b), of which one extruder shaft (119) is connected to one extruder screw (5a) and the other extruder shaft (19) is connected to the other extruder screw (5b) and rotates therewith, are interconnected via the synchronization and torsion transmission device (36) provided at that location,
- each of the at least two motors (M1, M2) is in the form of a direct drive and is coupled to an extruder screw (5; 5a; 5b).

2. Multiple-screw extruder according to claim 1, **characterized in that** one motor (M1) at the inlet side (25a) drives one of the at least two extruder screws (5a), and **in that** the at least one additional motor (M2) drives the at least one other extruder screw (5b) at the opposite discharge side (25b).

3. Multiple-screw extruder according to claim 1, **characterized in that** the at least two motors (M1, M2) for the at least two extruder screws (5a, 5b) are both arranged at the inlet side or are both arranged at the discharge side (25a, 25b), the at least one motor (M1) being drivingly connected to the at least one first extruder screw (5a) and the at least one second motor (M2) being drivingly connected to the at least one second extruder screw (5b).

4. Multiple-screw extruder according to any one of claims 1 to 3, **characterized in that** the motor (M; M1, M2) associated with the respective extruder screw (5; 5a, 5b) is connected to the associated extruder screw (5; 5a, 5b) rigidly and/or without any gearing, preferably in the form of a direct drive, wherein the motor shaft (9) associated with the respective motor (M1, M2) is connected in axial extension to the extruder shaft (19), forming a drive shaft (19), of an associated extruder screw (5a, 5b) or merges into it.

5. Multiple-screw extruder according to any one of claims 1 to 4, **characterized in that** the extruder screws (5a, 5b) have at the drive side thereof a drive shaft (9) or a drive shaft (9) as an extruder shaft whose bearing shells are sealed with respect to the housing interior (3') by means of seals (29, 39).

6. Multiple-screw extruder according to any one of claims 1 to 4, **characterized in that** the extruder screws (5a, 5b) have at the non-driving side thereof a stub shaft (119) as an extruder shaft (119) whose bearing shells are sealed with respect to the housing interior (3') by means of seals (29, 39).

7. Multiple-screw extruder according to claim 5 or claim 6, **characterized in that** the seals (29, 39) are configured at the discharge side (25b) to take up the increased pressures and/or thermal loads which occur at that location.

8. Multiple-screw extruder according to claim 7, **characterized in that** the seals (29, 39) are constructed at the discharge side (25b) as cascade seals and/or as cooling gap seals.

9. Multiple-screw extruder according to any one of claims 6 to 8, **characterized in that** the seals (29, 39) on the drive shaft (9) or the drive shaft (19) and on the non-driven stub shaft (119) are arranged adjacent, preferably directly adjacent to the housing interior (3').

10. Multiple-screw extruder according to any one of claims 1 to 9, **characterized in that** the synchronization and torsion transmission device (35) is arranged in the region of the drive shaft (9) and/or the drive shaft (19), by means of which the extruder screw (5a, 5b) is drivingly connected to the associated motor (M1, M2).

11. Multiple-screw extruder according to any one of claims 1 to 10, **characterized in that** one synchronization and torsion transmission device (36) is provided in the region of the extruder shaft (119) constructed as a stub axle (119) which protrudes axially at an end face at the non-driven side of an associated extruder screw (5a, 5b) in an axial direction relative to the bearing of the extruder screw (5a, 5b).

12. Multiple-screw extruder according to claim 10 or claim 11, **characterized in that** the synchronization and torsion transmission device (35, 36) is arranged in a housing extension (103) which is fitted to the end faces of the extruder housing (3).

13. Multiple-screw extruder according to claim 12, **characterized in that** the outermost bearing (46) for the drive shaft (9) or the drive shaft (19) and the stub axle (119) is provided in the region of the housing extension (103), and **in that** another bearing (45) which is located nearer the extruder interior (3') at the opposite side of the synchronization and torsion transmission device (35, 36) is accommodated in the end-face passage region of the extruder housing (3).

14. Multiple-screw extruder according to any one of claims 1 to 13, **characterized in that** the multiple-screw extruder comprises at least two contra-rotating extruder screws (5a, 5b) which are driven in opposite directions of rotation by means of the motors (M1, M2).

15. Multiple-screw extruder according to any one of claims 1 to 14, **characterized in that** the synchronization and/or torsion transmission devices comprise gear-wheels (39.1, 39.2), a gear-wheel (39.1) which meshes with the gear-wheel (39.2) which is arranged at the same height in a rotationally secure manner on the adjacent extruder screw being arranged in a rotationally secure manner at the inlet side (25a) and at the discharge side (25b) respectively both on the motor-side drive shaft (19) and on the stub shaft (119) which is located opposite relative to the drive side.

16. Multiple-screw extruder according to any one of claims 1 to 14, **characterized in that** the multiple-screw extruder comprises at least two synchronous extruder screws (5a, 5b) which are driven in the same direction of rotation by means of the motors (M1, M2).

17. Multiple-screw extruder according to any one of claims 1 to 16, **characterized in that** the synchronization and/or torsion transmission devices comprise gear-wheels (39.1, 39.2), a gear-wheel (39.1) being arranged in a rotationally secure manner at the inlet side (25a) and/or at the discharge side (25b) respectively on the drive shaft (19) and/or the stub shaft (119), which gear-wheel (39.1) is in engagement with the gear-wheel (39.2) which is arranged at the same height in a rotationally secure manner on the adjacent extruder screw,
- with a redirecting pinion gear (39.3) being interposed or
- with two opposing redirecting pinion gears (39.3, 39.3') which each mesh with both gear-wheels (39.1 and 39.2) being interposed or
- by means of an internally-toothed gear-wheel (39.3").

## Revendications

1. Extrudeuse multi-vis, en particulier extrudeuse à double vis, présentant les éléments suivants :
- un boîtier (3),
- plusieurs perçages ménagés dans le boîtier (3), qui sont prévus dans au moins un tronçon du boîtier (3),
- les perçages du boîtier se chevauchent au moins dans une longueur axiale partielle du boîtier (3),
- une vis d'extrudeuse (5a, 5b) est agencée respectivement dans chacun des plusieurs perçages du boîtier,
- il est prévu au moins deux moteurs (M1, M2) pour lesdites au moins deux vis d'extrudeuse (5a, 5b),
- il est prévu aussi bien du côté entrée (25a) que du côté sortie (25b) un système de synchronisation et de transmission de couple (35, 36) au moyen duquel une synchronisation desdites au moins deux vis d'extrudeuse (5a, 5b) coopérantes peut être atteinte,
**caractérisée par** les caractéristiques suivantes :
- lesdites au moins deux vis d'extrudeuse (5a, 5b) sont montées dans des paliers aussi bien du côté entrée (25a) que du côté sortie (25b), ce pourquoi l'arbre d'extrudeuse (19, 119) qui dépasse de la vis d'extrudeuse respective (5a, 5b) sur les deux côtés frontaux opposés est monté dans un palier (45, 46),
- lesdits au moins deux arbres d'extrudeuse (19, 119) prévus du côté entrée (25a), parmi lesquels un arbre (19) est relié à une vis d'extrudeuse (5a) et l'autre arbre d'extrudeuse (119) est relié à l'autre vis d'extrudeuse (5b) et tourne conjointement avec celle-ci, sont couplés l'un à l'autre via le système de synchronisation et de transmission de couple (35) prévu du côté entrée (25a),
- lesdits au moins deux arbres d'extrudeuse (19, 119) prévus du côté sortie (25b), parmi lesquels un arbre d'extrudeuse (119) est relié à une vis d'extrudeuse (5a) et l'autre arbre d'extrudeuse (19) est relié à l'autre vis d'extrudeuse (5b) et tourne conjointement avec celle-ci, sont couplés l'un à l'autre via le système de synchronisation et de transmission de couple (36) prévu à cet endroit,
- chacun desdits au moins deux moteurs (M1, M2) est couplé sous la forme d'un entraînement direct avec une vis d'extrudeuse (5 ; 5a ; 5b).

2. Extrudeuse multi-vis selon la revendication 1, **caractérisée en ce qu'**un moteur (M1) du côté entrée (25a) entraîne l'une desdites au moins deux vis d'extrudeuse (5a), et **en ce que** ledit au moins un autre moteur (M2) entraîne au moins une autre vis d'extrudeuse (5b) du côté sortie (25b) opposé.

3. Extrudeuse multi-vis selon la revendication 1, **caractérisée en ce que** lesdits au moins deux moteurs (M1, M2) pour lesdites au moins deux vis d'extrudeuse (5a, 5b) sont agencés tous les deux du côté entrée ou tous les deux du côté sortie (25a, 25b), et ledit au moins un moteur (M1) est en liaison d'entraînement avec au moins une première vis d'extrudeuse (5a), et ledit second moteur (M2) est en liaison d'entraînement avec une seconde vis d'extrudeuse (5b).

4. Extrudeuse multi-vis selon l'une des revendications 1 à 3, **caractérisée en ce que** le moteur (M ; M1, M2) associé à la vis d'extrudeuse (5 ; 5a, 5b) est relié de façon rigide et/ou sans mécanisme à la vis d'extrudeuse associée respective (5 ; 5a, 5b), de préférence sous la forme d'un entraînement direct dans lequel l'arbre de moteur (9) associé au moteur respectif (M1, M2) est couplé dans le prolongement axial avec l'arbre d'extrudeuse (19), formant un arbre d'entraînement (19), d'une vis d'extrudeuse associée (5a, 5b), ou se transforme dans cet arbre d'extrudeuse.

5. Extrudeuse multi-vis selon l'une des revendications 1 à 4, **caractérisée en ce que** les vis d'extrudeuse (5a, 5b) comprennent, sur leur côté entraînement, un axe d'entraînement (9) ou respectivement un arbre d'entraînement (9) à titre d'arbre d'extrudeuse, dont les coques de palier sont étanchées par rapport à l'espace intérieur (3') du boîtier via des joints (29, 39).

6. Extrudeuse multi-vis selon l'une des revendications 1 à 4, **caractérisée en ce que** les vis d'extrudeuse (5a, 5b) comprennent, sur leur côté non entraîné, un moignon d'arbre (119) à titre d'arbre d'extrudeuse (119), dont les coques de palier sont étanchées par rapport à l'espace intérieur (3') du boîtier via des joints (29, 39).

7. Extrudeuse multi-vis selon la revendication 5 ou 6, **caractérisée en ce que**, sur le côté sortie (25b), les joints (29, 39) sont conçus pour encaisser les pressions et/ou les charges thermiques élevées qui s'y produisent.

8. Extrudeuse multi-vis selon la revendication 7, **caractérisée en ce que** les joints (19, 39) du côté sortie (25b) sont réalisés sous forme de joints en cascade et/ou sous forme de joints à intervalle refroidi.

9. Extrudeuse multi-vis selon l'une des revendications 6 à 8, **caractérisée en ce que** les joints (29, 39) sur l'axe d'entraînement ou respectivement sur l'arbre d'entraînement (9, 19) ainsi que sur le moignon d'arbre (119) non entraîné sont agencés au voisinage et de préférence au voisinage direct de l'espace intérieur (3') du boîtier.

10. Extrudeuse multi-vis selon l'une des revendications 1 à 9, **caractérisée en ce que** le système de synchronisation et de transmission de couple (35) est agencé dans la région de l'axe d'entraînement (9) et/ou de l'arbre d'entraînement (19), grâce à quoi la vis d'extrudeuse respective (5a, 5b) est en liaison d'entraînement avec le moteur associé (M1, M2).

11. Extrudeuse multi-vis selon l'une des revendications 1 à 10, **caractérisée en ce que** le système de synchronisation et de transmission de couple (36) est prévu dans la région de l'arbre d'extrudeuse (119), réalisé sous forme de moignon d'arbre (119), ce moignon dépassant axialement du côté frontal sur le côté non entraîné d'une vis d'extrudeuse associée (5a, 5b), en direction axiale pour le montage de la vis d'extrudeuse (5a, 5b).

12. Extrudeuse multi-vis selon la revendication 10 ou 11, **caractérisée en ce que** le système de synchronisation et de transmission de couple (35, 36) est agencé dans un élargissement de boîtier (103), qui est rapporté sur les côtés frontaux du boîtier d'extrudeuse (3).

13. Extrudeuse multi-vis selon la revendication 12, **caractérisée en ce que** le palier (46) situé le plus à l'extérieur est prévu pour l'axe d'entraînement (9) ou respectivement pour l'arbre d'entraînement (19), ainsi que pour le moignon d'arbre (119) dans la région de l'élargissement de boîtier (103), et **en ce qu'**un autre palier (45) situé sur le côté opposé du dispositif de synchronisation et de transmission de couple (35, 36) plus rapproché de l'espace intérieur (3') de l'extrudeuse est logé dans la région de traversée des côtés frontaux du boîtier d'extrudeuse (3).

14. Extrudeuse multi-vis selon l'une des revendications 1 à 13, **caractérisée en ce que** l'extrudeuse multi-vis comprend au moins deux vis d'extrudeuse (5a, 5b) en sens opposés, qui sont entraînées via les moteurs (M1, M2) avec un sens de rotation opposé.

15. Extrudeuse multi-vis selon l'une des revendications 1 à 14, **caractérisée en ce que** les systèmes de synchronisation et/ou de transmission de couple sont constitués par des engrenages (39.1, 39.2), dans lesquels un engrenage (39.1) est agencé solidairement en rotation, aussi bien sur l'arbre d'entraînement côté moteur (19) que sur le moignon d'arbre (119) situé à l'opposé du côté d'entraînement, respectivement sur le côté entrée (25a) et sur le côté sortie (25b), cet engrenage étant en engrènement avec l'engrenage (39.2) agencé à la même hauteur solidairement en rotation sur la vis d'extrudeuse voisine.

16. Extrudeuse multi-vis selon l'une des revendications 1 à 14, **caractérisée en ce que** l'extrudeuse multi-vis comprend au moins deux vis d'extrudeuse (5a, 5b) tournant dans le même sens, lesquelles sont entraînées via les moteurs (M1, M) dans le même sens de rotation.

17. Extrudeuse multi-vis selon l'une des revendications 1 à 16, **caractérisée en ce que** les systèmes de synchronisation et/ou de transmission de couple sont constitués par des engrenages (39.1, 39.2), dans lesquels un engrenage (39.1) est agencé solidairement en rotation respectivement du côté entrée (25a) et/ou du côté sortie (25b) sur l'arbre d'entraînement (19) et/ou sur le moignon d'arbre (119), cet engrenage étant en engagement avec l'engrenage (39.2) agencé à la même hauteur solidairement en rotation sur la vis d'extrudeuse voisine
- avec interposition d'un pignon de renvoi (39.3), ou
- avec interposition de deux pignons de renvoi opposés (39.3, 39.3'), qui sont respectivement en engrènement avec les deux roues dentées (39.1 et 39.2), ou
- au moyen d'une route dentée (39.3") présentant une denture vers l'intérieur.
